# EUROPÄISCHE PATENTSCHRIFT

(11) **EP 1 205 283 B1**
(45) Veröffentlichungstag und Bekanntmachung des Hinweises auf die Patenterteilung: **11.10.2006**
(21) Anmeldenummer: 01116437.3
(22) Anmeldetag: 06.07.2001
(51) Int. Cl.: B25J 9/10, B05B 13/04

(54) **Riemenantriebssystem für ein Werkzeug**
Worktool drive mechanism with belt transmission
Méchanisme d'entraînement d'un outil avec transmission par courroie

(30) Priorität: 21.07.2000 DE 10035669
(43) Veröffentlichungstag der Anmeldung: 15.05.2002
(73) Patentinhaber: Dürr Systems GmbH, 70435 Stuttgart (DE)
(72) Erfinder: Steiner, Oliver, 74385 Pleidelsheim (DE)
(74) Vertreter: Heusler, Wolfgang

(56) Entgegenhaltungen:
- DE-A- 3 220 077
- DE-A- 19 649 538
- PATENT ABSTRACTS OF JAPAN vol. 1998, no. 01, 30. Januar 1998 (1998-01-30) & JP 09 225867 A (NIPPON SEIKO KK), 2. September 1997 (1997-09-02)

## Beschreibung

Die Erfindung betrifft ein Antriebssystem für ein Werkzeug zur serienweisen Bearbeitung, Behandlung oder Handhabung von Werkstücken gemäß dem Oberbegriff des unabhängigen Patentanspruchs.

Ein typisches Anwendungsbeispiel für ein derartiges Antriebssystem sind Beschichtungsmaschinen für die Serienbeschichtung von Fahrzeugkarossen, insbesondere die an sich üblichen Dachmaschinen, an deren Dachbalken parallel nebeneinander mehrere Zerstäuber horizontal längs des Dachbalkens verschiebbar montiert sind (Y-Achse). Der Dachbalken ist seinerseits horizontal quer zu seiner Längsachse verschiebbar (X-Achse) sowie zwischen seinen beiden Seitenständern vertikal auf- und abbewegbar (Z-Achse). Die Zerstäuber können elektrostatisch arbeitende, also im Betrieb auf Hochspannung liegende Rotationszerstäuber oder auch Luftzerstäuber sein und sind üblicherweise schwenkbar an vertikalen Armen gelagert, die ihrerseits an dem Laufwagen der Y-Achse befestigt sind (DE 19820527).

Die Länge der vertikalen Arme der Zerstäuber ist bei den meisten derzeit üblichen Dachmaschinen nicht verstellbar, wie es zur einfacheren, von den Vertikalbewegungen des Dachbalkens unabhängigen Änderung der Zerstäuberposition längs der Z-Achse wünschenswert ist. Es gibt zwar bereits Dachbalken mit in Z-Richtung ausfahrbaren Zerstäubern (als Z1-Achse bezeichnet), die aber nicht schwenkbar gelagert sind, sondern durch Drehen des gesamten Dachbalkens um seine Längsachse verschwenkt werden.

Bei Seitenmaschinen für die Kraftfahrzeuglackierung ist es auch schon bekannt, Zerstäuber schwenkbar an einem teleskopartig horizontal ausfahrbaren Antriebsarm zu lagern (DE 196 49 538 A1). Hierbei dient ein Spindelgetriebe als Antrieb für die Linearbewegung des Armes, während der Zerstäuber bei praktisch realisierten Ausführungsformen über ein Winkelgetriebe und eine sich durch den Arm erstreckende Welle von einem im Ständer der Seitenmaschine befindlichen Motor verschwenkt wird. Bei elektrostatischen Zerstäubern muß die Welle aus isolierendem Werkstoff bestehen. Der Antriebsarm wird von dem vertikal auf- und ab bewegbaren Laufwagen der Seitenmaschine durch einen vertikalen Schlitz des Ständers der Maschine bewegt, der in der bei Beschichtungsmaschinen üblichen Weise durch ein umlaufendes, sich mit dem Laufwagen verschiebendes flexibles Abdeckband nach außen geschlossen ist. Zweck der horizontalen Verlängerung des Antriebsarms ist hier die Möglichkeit, mit der Seitenmaschine auch das Dach der Karossen beschichten zu können.

Das Dokument JP-A-09 225 867 offenbart ein Antriebssystem für kombinierte Linear- und Schwenkbewegungen.

Der Erfindung liegt die Aufgabe zugrunde, ein mechanisch zuverlässiges Antriebssystem für kombinierte Linear- und Schwenkbewegungen zu schaffen, das geringen konstruktiven Aufwand erfordert und weniger sperrig ist als vergleichbare bekannte Systeme.

Diese Aufgabe wird durch das in den Patentansprüchen angegebene Antriebssystem gelöst.

Besondere Vorteile hat das Antriebssystem bei Lackiermaschinen. Insbesondere kann der Antriebsarm sowohl die Antriebsmechanismen für die Linear- und Schwenkbewegungen des Zerstäubers als auch dessen gesamtes Versorgungsleitungssystem einkapseln und eine durchgehend glatte, einfach strukturierte Oberfläche haben, so daß er wenig zum Verschmutzen neigt und optimale Reinigungsmöglichkeiten bestehen und dementsprechend die Gefahr der Verschmutzung des zu lackierenden Werkstücks durch abfallende Farb- und sonstige Partikel reduziert wird. Bei elektrostatischen Zerstäubern ist eine saubere Oberfläche des Antriebsarms auch wichtig für die erforderliche Isolation zwischen dem auf Hochspannung liegenden Zerstäuber und seiner geerdeten Halterung. Außerdem vermeidet eine durchgehend glatte Oberfläche das Sprühverhalten der Zerstäuber störende Luftverwirbelungen.

Für elektrostatische Zerstäuber ist auch wichtig, daß das Antriebssystem problemlos im gesamten Armverstellbereich die erforderliche Isolation und Potentialtrennung zwischen dem Zerstäuber und den geerdeten Teilen der Maschine gewährleisten kann.

Bei Dachmaschinen ergibt sich der besondere Vorteil, daß alle parallel an dem Dachbalken angeordneten Zerstäuber durch eine ihnen gemeinsame einzige Antriebswelle verschwenkbar sind.

Ein genereller Vorteil besteht im übrigen darin, daß das Antriebssystem durch problemlosen Umbau in bereits vorhandene Dachmaschinen oder sonstige Maschinen mit an einem Antriebsarm montierten Werkzeugen integriert werden und dadurch deren Bewegungsmöglichkeit erweitern kann. Das hier beschriebene, als "dynamischer" Riemenantrieb wirkende Antriebssystem eignet sich nicht nur für Lackiermaschinen, sondern für beliebige Maschinen zur Bearbeitung, Behandlung oder Handhabung von Werkstücken, bei denen ein translatorischer Antrieb mit einem bei Bedarf gleichzeitig arbeitenden Rotationsantrieb gekoppelt werden soll.

An dem bevorzugten Beispiel eines Antriebssystems für einen elektrostatischen oder sonstigen Zerstäuber, der an einem Antriebsarm linear verschiebbar und gleichzeitig verschwenkbar am Dachbalken einer Dachmaschine für die Karossenbeschichtung montierbar ist, wird die Erfindung näher erläutert. In der Zeichnung zeigen
- Fig. 1: den Antriebsarm im geöffneten Zustand in seiner vertikal unteren Endstellung;
- Fig. 2: den geöffneten Antriebsarm in seiner oberen Endstellung; und
- Fig. 3: eine aufgebrochene Ansicht des Antriebsarms im geschlossenen Zustand.

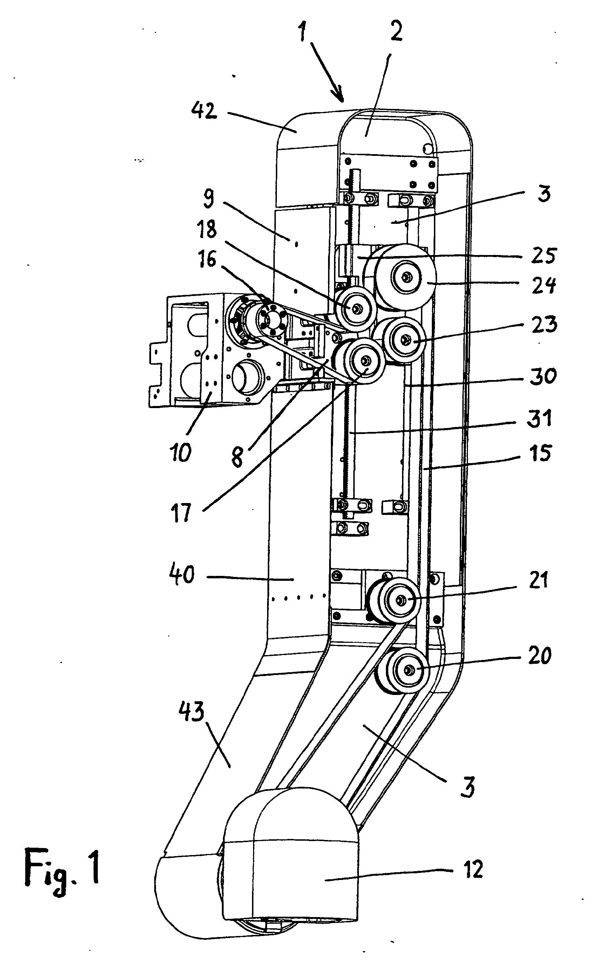

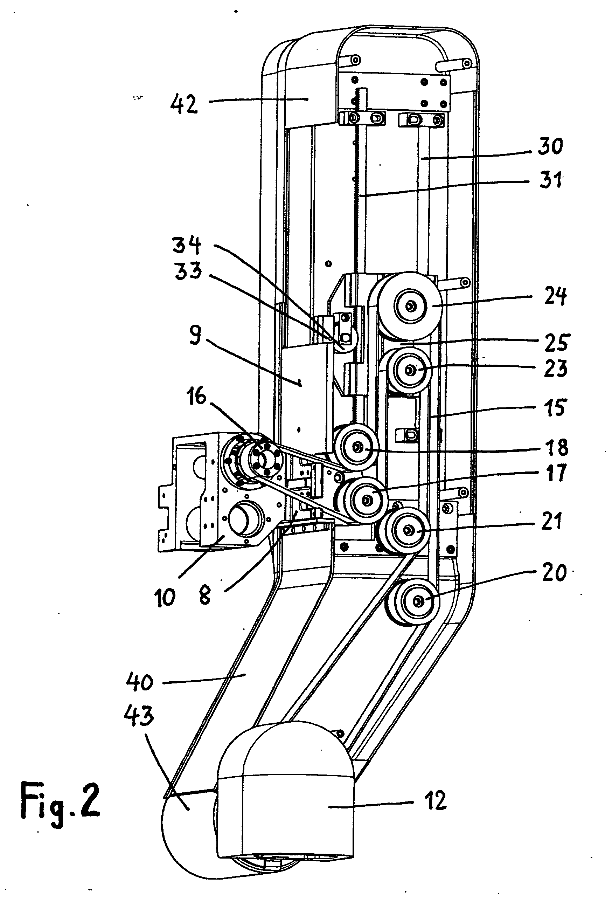

Der als Lackierarm dienende Antriebsarm 1 besteht hauptsächlich aus einem die tragende Einheit des gesamten Armes bildenden langgestreckten Grundkörper 2 in der allgemeinen Form eines T-Profils aus faserverstärktem Isolierwerkstoff (GFK) in Sandwich-Bauweise. Auf den den Mittelsteg 3 des Grundkörpers gegenüberliegenden Seiten ist der Antriebsarm 1 nach außen durch aufgeschraubte GFK-Deckel 4 abgedeckt. In Fig. 1 und 2 ist der Arm ohne Deckel dargestellt, so daß sein Inneres sichtbar ist.

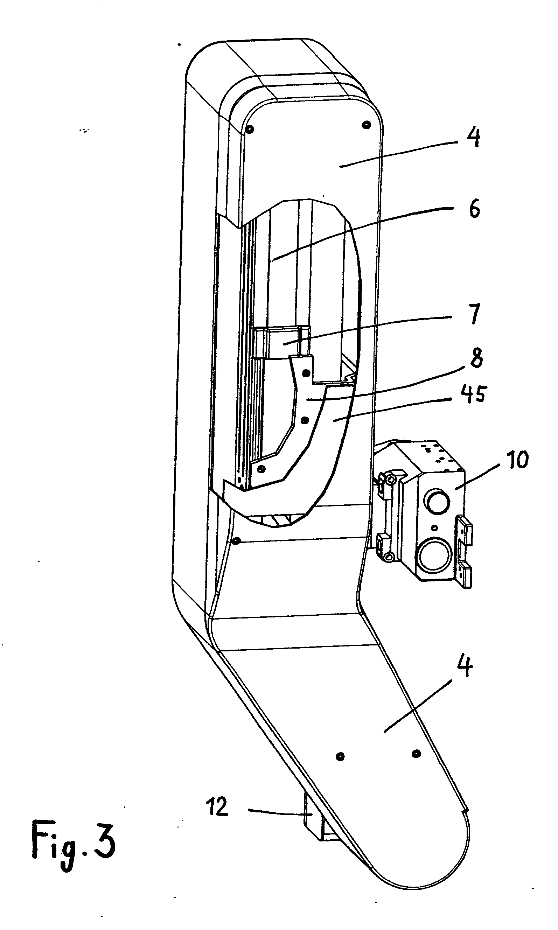

An dem Mittelsteg 3 des GFK-Grundkörpers 2 ist auf der in Fig. 1 und 2 hinteren unsichtbaren Stegseite die in Fig. 3 erkennbare pneumatische Lineareinheit 6 fixiert, deren Schlitten 7 an einer der quer zu dem Steg 3 und den Deckeln verlaufenden Schmalseiten des Armes 1 an einer Metallkonsole 8 befestigt ist, die als Halterung des Armes 1 dient. Die Außenseite eines Plattenteils 9 der Metallkonsole 8 liegt in der Ebene der Außenfläche des Armes. Die Konsole 8 ist fest mit einem Laufwagenteil 10 des (nicht dargestellten) Dachbalkens der Dachmaschine verbunden, mit dem der Antriebsarm 1 horizontal längs des Dachbalkens bewegbar ist. Durch die Lineareinheit 5 wird der Antriebsarm 1 in Vertikalrichtung bezüglich der Konsole 9 und des Laufwagenteils 10 auf- und ab bewegt (Z1-Achse).

Im unteren Bereich kann der Antriebsarm 1 parallel zur Ebene seines Mittelsteges 3 in Richtung unter den Dachbalken darstellungsgemäß so abgebogen sein, daß er auf seiner Konsolenseite etwas vorspringt. An dem vorspringenden unteren Ende des Armes ist um eine bei montierten Arm horizontal parallel zum Dachbalken verlaufende Achse schwenkbar ein Zerstäuberträger 12 gelagert, an dem beispielsweise ein Rotationszerstäuber (nicht dargestellt) befestigt sein kann. Dieser Bewegungsfreiheitsgrad des Zerstäubers wird üblicherweise als Achse B bezeichnet.

Auf der der Lineareinheit 6 gegenüberliegenden, in Fig. 1 und 2 sichtbaren Seite ist an dem Mittelsteg 3 des Grundkörpers 2 der Antriebsmechanismus für die Schwenkbewegung des Zerstäuberträgers 12 gelagert. Der Antrieb erfolgt über einen Zahnriemen 15, der von einer in dem Laufwagenteil 10 auf einer Antriebswelle gelagerten Zahnscheibe 16 angetrieben wird und seinerseits eine (nicht sichtbare) Zahnscheibe antreibt, die in dem unteren Ende des Armes 1 drehbar gelagert ist und den Zerstäuberträger 12 verdreht. Darstellungsgemäß ist der Zahnriemen 15 über eine Anordnung von zu der Zahnscheibe 16 achsparallelen Umlenkrollen geführt, von denen zwei Rollen 17 und 18 auf der Metallkonsole 8 gelagert, also bezüglich der Antriebs-Zahnscheibe 16 ortsfest sind, während zwei Umlenkrollen 20 und 21 auf dem Mittelsteg 3 des Grundkörpers 2 und zwei weitere Umlenkrollen 23 und 24 auf einem relativ zu dem Grundkörper 2 bewegbaren Ausgleichsschlitten 25 gelagert sind. Die beiden Rollen jedes Paares sind längs des Armes 1, also längs seiner Verschiebungsrichtung voneinander beabstandet. Die Rollen 20, 21 liegen längs des Armes 1 zwischen den Rollen 17, 18 und dem Zerstäuberträger 12, während sich die Rollen 23, 24 des Ausgleichsschlittens 25 darstellungsgemäß mehr oder weniger weit auf der entgegengesetzten Seite der Rollen 17, 18 befinden. Der Zahnriemen 15 verläuft von der Zahnscheibe 16 aus zunächst zu der in der Zeichnung unteren Rolle 17 der Konsole 8, von dort über die untere Rolle 23 des Ausgleichsschlittens 25 und die obere Rolle 21 des Grundkörpers zu der angetriebenen Zahnscheibe des Zerstäuberträgers 12 und von dieser über die übrigen Rollen 20, 24 und 18 zurück zu der Antriebs-Zahnscheibe 16. Die Bewegungsrichtung des Zahnriemens ist je nach der gewünschten Schwenkrichtung des Zerstäubers unsteuerbar.

Der die Rollen 23 und 24 tragende Ausgleichsschlitten 25 hat die Aufgabe, die Änderungen der Entfernung zwischen der Antriebs-Zahnscheibe 16 und der Schwenkachse des Zerstäuberträgers 12 zu kompensieren. Er ist zu diesem Zweck an dem Grundkörper 2 längs der Linearbewegungsrichtung des Armes 1 verschiebbar gelagert, beispielsweise zwischen zwei im Querschnitt abgerundeten, an dem Mittelsteg 3 befestigten Rundführungsstangen 30 bzw. 31, die in entsprechend gerundete Führungsnuten an den seitlichen Rändern des Schlittens 25 eingreifen. Statt runder könnten auch anders geformte Führungen vorgesehen sein. Die in der Zeichnung linke Führungsstange 31 ist auf der der Führungsfläche abgewandten Seite als Zahnstange ausgebildet, die parallel einer zweiten Zahnstange 33 (Fig. 2) gegenübersteht, welche nicht mit dem Antriebsarm 1, sondern mit der Metallkonsole 8 fest verbunden ist, so daß die beiden Zahnstangen bei den Linearbewegungen des Armes parallel relativ zueinander verschoben werden. Ein Ritzel 34 ist achsparallel zu den Rollen des Zahnriemens so auf dem Ausgleichsschlitten 25 gelagert, daß es zwischen den beiden Zahnstangen sitzt und mit beiden kämmt und bei einer Bewegung der einen Zahnstange relativ zu der anderen den Schlitten mitnimmt.

Wenn der Antriebsarm 1 beispielsweise aus seiner unteren Endstellung gemäß Fig. 1 von der Lineareinheit 6 nach oben in Richtung zum Dachbalken zurückgezogen wird, führt der Ausgleichsschlitten 25 eine gleichsinnige, also ebenfalls nach oben gerichtete Kompensationsbewegung aus, die unter Berücksichtigung der Umlenkwege des Zahnriemens 15 so bemessen ist, daß dessen Trumlängenänderung kompensiert wird und er bei allen Armpositionen die gleiche Zugspannung hat. Entsprechendes gilt für die Ausfahrbewegung des Antriebsarms 1 aus seiner oberen Endstellung gemäß Fig. 2 nach unten, wobei auch der Ausgleichsschlitten 25 nach unten bewegt wird, ggf. bis in die Endstellung gemäß Fig. 1. Bei dem dargestellten Beispiel folgt der Ausgleichsschlitten 25 aufgrund der Untersetzung des den Schlitten 25 antreibenden, durch die beiden Zahnstangen und das Ritzel 34 gebildeten Getriebes im Verhältnis 1:2, d.h. der Ausgleichsschlitten 25 fährt über den gesamten Hubbereich jeweils das 0,5-fache des Verfahrweges des Armes 1 nach. Die gleichbleibende Spannung des Zahnriemens 15 wird durch Justieren der in Längsrichtung verstellbar montierten gezahnten Rundführungsstange 31 eingestellt.

Auf seinen beiden jeweils durch einen Deckel 4 (Fig. 3) geschlossenen Seiten und seiner der Konsole 8 abgewandten Schmalseite ist der Antriebsarm 1 nach außen vollständig abgekapselt. In seiner unteren Endstellung ist er auch an der verbleibenden, in Fig. 1 und 2 linken Schmalseite geschlossen bis auf die zum Einführen des Zahnriemens 15 erforderliche Öffnung, die oben durch den Plattenteil 9 der Metallkonsole 8 und unten durch eine flexible bandförmige Abdeckplatte 40 begrenzt wird. Zwischen dem Plattenteil 9 bzw. der Abdeckplatte 40 und der ihnen entsprechend breiten, durch das T-Profil des Grundkörpers 2 gebildeten gegenüberliegenden Schmalseitenwand befinden sich die aus der Zeichnung ersichtlichen, sich um die oberen und unteren Enden des Armes erstreckenden weiteren Wandteile des Grundkörpers 2. Die flexible Platte 40 ist mit ihren Seitenkanten längsverschiebbar in Führungsnuten in den beiden Deckeln 4 eingesetzt (nicht dargestellt). Auch der Laufwagenteil 10 und die darin gelagerte Antriebs-Zahnscheibe 16 können weitgehend verdeckt sein, bei dem betrachteten Beispiel durch die Anordnung in der für die Horizontalbewegung erforderlichen Längsöffnung des Dachbalkens. Auch eine gemeinsame Antriebswelle für die Zahnscheiben 16 mehrerer parallel arbeitender Antriebsarme für je einen oder mehrere Zerstäuber kann in der Längsöffnung des Dachbalkens angeordnet sein.

Wenn der Antriebsarm 1 aus seiner unteren Endstellung nach oben in Richtung zu seiner oberen Endstellung gemäß Fig. 2 bewegt wird, bildet sich zwischen dem oberen Rand des Plattenteils 9 und dem unteren Rand des benachbarten Wandteils 42 des Grundkörpers 2 ein Spalt, der einfachheitshalber offen bleiben kann, wenn dies die Betriebsbedingungen zulassen. Währenddessen schiebt sich die an der Konsole 8 befestigte, mit ihr stehen bleibende Abdeckplatte 40 nach unten über den hochfahrenden Wandteil 43 am unteren Ende des Armes 1, wobei sie in den erwähnten Führungsnuten der beiden Deckel 4 gleitet.

Statt der Abdeckplatte 40 kann auch in der bei Beschichtungsmaschinen an sich bekannten Weise ein umlaufendes Abdeckband vorgesehen werden, das den Antriebsarm während seiner Bewegungen unmittelbar angrenzend an die für den Zahnriemen 15 erforderliche Öffnung in jeder Stellung geschlossen hält. Die Abdeckplatte 40 kann aber vorteilhafter sein, da bei einem umlaufenden Abdeckband Abriebpartikel auf das zu beschichtende Werkstück fallen und Lackfehler verursachen können. Wenn der erwähnte, bei der Aufwärtsbewegung entstehende Spalt unerwünscht ist, kann auch oberhalb des Plattenteils 9 eine mit ihr verbundene flexible Platte vorgesehen sein, die sich bei der Abwärtsbewegung des Armes über den oberen Wandteil 42 schieben kann. Da auch keine sonstigen außenliegenden bewegten Bauteile vorhanden sind, von denen Abriebpartikel herabfallen könnten, ist die Beeinträchtigung der Beschichtungsqualität durch solche Partikel auf ein Minimum reduziert.

## Patentansprüche

1. Antriebssystem für ein Werkzeug zur serienweisen Bearbeitung, Behandlung oder Handhabung von Werkstücken mit einem an einer Halterung (8) längs einer linearen Achse verschiebbar montierten Antriebsarm (1), an dessen Ende das Werkzeug um eine quer zu der linearen Achse verlaufenden Schwenkachse schwenkbar gelagert ist,
einer Linearantriebseinheit (6) zur Verschiebung des Antriebsarms (1) in seiner Längsrichtung relativ zu der Halterung (8), und
einer Antriebseinrichtung zum Verschwenken des von der Linearantriebseinheit (6) translatorisch verschiebbaren Werkzeugs um die Schwenkachse,
**dadurch gekennzeichnet,**
**daß** zum Verschwenken des Werkzeugs ein das Werkzeug mit einem an der Halterung (8) gelagerten Antriebsglied (16) verbindender Riemenantrieb vorgesehen ist,
**daß** der Riemen (15) des Riemenantriebs über mindestens eine Umlenkrolle (23, 24) geführt ist, die auf einem relativ zu dem Antriebsarm (1) bewegbaren Träger (25) gelagert ist, und
**daß** bei der translatorischen Verschiebung des Werkzeugs die Änderung seiner Entfernung von dem Antriebsglied (16) durch die Relativbewegung des Trägers (25) kompensierbar ist.

2. Antriebssystem nach Anspruch 1, **dadurch gekennzeichnet, daß** das Werkzeug ein Zerstäuber für die Serienbeschichtung von Kraftfahrzeugkarossen oder sonstigen Werkstücken ist und der Antriebsarm (1) an einem Laufwagenteil (10) der Beschichtungsmaschine gehaltert ist, welches längs einer quer zu der linearen Verschiebungsachse des Antriebsarms (1) und parallel oder quer zu der Schwenkachse verlaufenden zweiten linearen Achse verschiebbar gelagert ist.

3. Antriebssystem nach Anspruch 1 oder 2, **dadurch gekennzeichnet, daß** auf dem bewegbaren Träger (25) des Antriebsarms (1), zwei Umlenkrollen (23, 24) gelagert sind und der Antriebsriemen (15) von dem Antriebsglied (16) aus über die eine dieser Umlenkrollen (23, 24) in Richtung zu dem Werkzeug und von diesem über die zweite Umlenkrolle zurück zu dem Antriebsglied (16) geführt ist.

4. Antriebssystem nach einem der Ansprüche 1 bis 3, **dadurch gekennzeichnet, daß** der bewegbare Träger ein auf dem Antriebsarm (1) längs der linearen Verschiebungsachse des Antriebsarms verschiebbar gelagerter Schlitten (25) ist, der durch einen mit der Längsverschiebung des Antriebsarmes (1) gekoppelten Antrieb (31, 33, 34) jeweils in die bezüglich der Halterung (8) gleiche Richtung wie der Antriebsarm (1) bewegt wird.

5. Antriebssystem nach Anspruch 4, **dadurch gekennzeichnet, daß** der Verfahrweg des Schlittens (25) um ein gegebenes Untersetzungsverhältnis kleiner ist als der des Antriebsarms (1).

6. Antriebssystem nach Anspruch 5, **dadurch gekennzeichnet, daß** der Antrieb des Schlittens (25) durch eine bezüglich der Halterung (8) feststehende erste Zahnstange (33), eine auf dem Antriebsarm (1) befestigte zweite Zahnstange (31) und ein zwischen den beiden Zahnstangen auf dem Schlitten (25) gelagertes Ritzel (34) gebildet ist.

7. Antriebssystem nach einem der vorangehenden Ansprüche, **dadurch gekennzeichnet, daß** mindestens je eine Umlenkrolle (17, 18 bzw. 20, 21) für den Riemen (15) an der Halterung (8) und an dem verschiebbarem Arm (1) gelagert ist.

8. Antriebssystem nach einem der vorhergehenden Ansprüche, **dadurch gekennzeichnet, daß** der Antriebsarm (1) einen aus Isolierwerkstoff bestehenden Grundkörper (2) hat, der auf zwei einander parallel zu der Schwenkebene des Werkzeugs gegenüberliegenden Seiten geschlossen ist, und daß Führungsnuten für ein flexibles Abdeckelement (40) vorgesehen sind, welches den Antriebsarm (1) quer zu den einander gegenüberliegenden Seiten angrenzend an die bezüglich des Antriebsarms (1) feststehende Halterung (8) abdeckt und bei der Längsverschiebung den Antriebsarms so verschoben wird, daß der Antriebsarm auf mindestens einer Seite der Halterung (8) geschlossen bleibt.

9. Antriebssystem nach einem der vorangehenden Ansprüche, **dadurch gekennzeichnet, daß** der Antriebsarm (1) einen im Querschnitt allgemein T-förmigen Grundkörper (2) hat, an dessen Mittelsteg (3) auf der einen Seite die Linearantriebseinheit (6) und auf der entgegengesetzten Seite der Riemenantrieb gelagert ist, und daß der Grundkörper (2) auf den beiden Seiten des Mittelstegs (3) durch je einen Deckel (4) geschlossen ist.

## Claims

1. Drive system for a tool for serial processing, treatment or handling of workpieces with a drive arm (1) which is mounted on a holder (8) so as to be displaceable along a linear axis, the tool being mounted on the end of the drive arm so as to be pivotable about a pivot axis extending transversely with respect to the linear axis, a linear drive unit (6) for the displacement of the drive arm (1) in its longitudinal direction relative to the holder (8), and a drive means by which the tool which can be displaced in translation by the linear drive unit (6) is pivoted about the pivot axis, **characterised in that** a belt drive which connects the tool to a drive member (16) mounted on the holder (8) is provided for pivoting of the tool, that the belt (15) of the belt drive is guided over at least one guide roller (23, 24) which is mounted on a carrier (25) which is movable relative to the drive arm (1), and that during the displacement in translation of the tool the change in its distance from the drive member (16) can be compensated for by the relative movement of the carrier (25).

2. Drive system as claimed in Claim 1, **characterised in that** the tool is an atomiser for the serial coating of vehicle bodies or other workpieces and the drive arm (1) is mounted on a carriage part (10) of the coating machine which is mounted so as to be displaceable along a second linear axis extending transversely with respect to the linear displacement axis of the drive arm (1) and parallel to or transversely with respect to the pivot axis.

3. Drive system as claimed in Claim 1 or 2, **characterised in that** two guide rollers (23, 24) are mounted on the movable carrier (25) of the drive arm (1) and the drive belt (15) is guided by the drive member (16) out over one of these guide rollers (23, 24) in the direction towards the tool and from there is guided over the second guide roller back to the drive member (16).

4. Drive system as claimed in any one of Claims 1 to 3, **characterised in that** the movable carrier is a carriage (25) which is mounted on the drive arm (1) so as to be displaceable along the linear displacement axis of the drive arm and which is moved in each case in the same direction with respect to the carrier (8) as the drive arm (1) by a drive (31, 33, 34) coupled to the longitudinal displacement of the drive arm (1).

5. Drive system as claimed in Claim 4, **characterised in that** the travel path of the carriage (25) is smaller than that of the drive arm (1) by a given reduction ratio.

6. Drive system as claimed in Claim 5, **characterised in that** the drive of the carriage (25) is formed by a first toothed rack (33) which is stationary with respect to the holder (8), a second toothed rack (31) which is fixed on the drive arm (1) and a pinion (34) which is mounted between the two toothed racks on the carriage (25).

7. Drive system as claimed in any one of the preceding claims, **characterised in that** at least one guide roller (17, 18 or 20, 21 respectively) for the belt (15) is mounted in each case on the holder (8) and on the displaceable arm (1).

8. Drive system as claimed in any one of the preceding claims, **characterised in that** the drive arm (1) has a main body (2) which is made from insulating material and is closed on two sides which lie opposite one another parallel to the pivot plane of the tool, and that guide grooves are provided for a flexible cover element (40) which covers the drive arm (1) transversely with respect to the opposing sides adjacent to the holder (8) which is stationary with respect to the drive arm (1) and during the longitudinal displacement the drive arm is displaced so that the drive arm remains closed on at least one side of the holder (8).

9. Drive system as claimed in any one of the preceding claims, **characterised in that** the drive arm (1) has a main body (2) which is of generally T-shaped cross-section and on which the linear drive unit (6) is mounted on one side and the belt drive is mounted on the opposing side on the central piece (3) of the main body, and that the main body (2) is closed on both sides of the central piece (3) by a cover (4) in each case.

## Revendications

1. Système d'entraînement pour un outil pour l'usinage en série, le traitement ou la manipulation de pièces avec un bras d'entraînement (1) monté sur une fixation (8) coulissant le long d'un axe linéaire, sur l'extrémité duquel l'outil est logé de façon à pouvoir basculer autour d'un axe de pivotement agencé transversalement à l'axe linéaire,
une unité d'entraînement linéaire (6) pour le déplacement du bras d'entraînement (1) dans sa direction longitudinale par rapport à la fixation (8), et
un dispositif d'entraînement pour le basculement de l'outil coulissant par translation par l'unité d'entraînement linéaire (6) autour de l'axe de pivotement,
**caractérisé en ce que**,
pour le basculement de l'outil, il est prévu un entraînement par courroie reliant l'outil à un élément d'entraînement (16) logé sur le support (8),
**en ce que** la courroie (15) de l'entraînement par courroie est guidée par au moins un galet de renvoi (23, 24), qui est logé sur un support (25) déplaçable par rapport au bras d'entraînement (1), et **en ce que**, lors du déplacement par translation de l'outil, la modification de sa distance à l'élément d'entraînement (16) peut être compensée par le déplacement relatif du support (25).

2. Système d'entraînement selon la revendication 1, **caractérisé en ce que** l'outil est un pulvérisateur pour le revêtement en série de carrosseries de véhicule ou d'autres pièces et l'arbre d'entraînement (1) est maintenu sur une partie du chariot roulant (10) de la machine de revêtement, qui est logée de façon à pouvoir coulisser le long d'un second axe linéaire agencé transversalement à l'axe de déplacement linéaire de l'arbre d'entraînement (1) et parallèlement ou transversalement à l'axe de pivotement.

3. Système d'entraînement selon la revendication 1 ou 2, **caractérisé en ce que** sur le support (25) mobile du bras d'entraînement (1) sont logés deux galets de renvoi (23, 24) et la courroie d'entraînement (15) est guidée à partir de l'élément d'entraînement (16) au moyen de l'un de ces galets de renvoi (23, 24) en direction de l'outil et à partir de cet outil au moyen du second galet de renvoi retourne en direction de l'élément d'entraînement (16).

4. Système d'entraînement selon l'une quelconque des revendications 1 à 3, **caractérisé en ce que** le support mobile est un coulisseau (25) logé sur le bras d'entraînement (1) de façon coulissante le long de l'axe de déplacement linéaire du bras d'entraînement, qui est déplacé par un entraînement (31, 33, 34) couplé avec le déplacement longitudinal du bras d'entraînement (1) respectivement dans la même direction par rapport à la fixation (8) que le bras d'entraînement (1).

5. Système d'entraînement selon la revendication 4, **caractérisé en ce que** la course de déplacement du coulisseau (25) est inférieure d'un rapport de démultiplication donné par rapport à celle du bras d'entraînement (1).

6. Système d'entraînement selon la revendication 5, **caractérisé en ce que** l'entraînement du coulisseau (25) est formé par une première crémaillère (33) fixe par rapport à la fixation (8), une seconde crémaillère (31) fixée sur le bras d'entraînement (1) et un pignon (34) logé entre les deux crémaillères sur le coulisseau (25).

7. Système d'entraînement selon l'une quelconque des revendications précédentes, **caractérisé en ce qu'**au moins à chaque fois un galet de renvoi (17, 18 ou 20, 21) pour la courroie (15) est logé sur la fixation (8) et sur le bras (1) coulissant.

8. Système d'entraînement selon l'une quelconque des revendications précédentes, **caractérisé en ce que** le bras d'entraînement (1) a un corps de base (2) à base de matériau isolant, lequel est fermé sur deux côtés se faisant face parallèlement au plan de pivotement de l'outil, et **en ce que** des rainures de guidage sont prévues pour un élément de recouvrement (40) flexible, qui recouvre le bras d'entraînement (1) transversalement aux côtés se faisant face de façon contiguë à la fixation (8) fixe par rapport au bras d'entraînement (1) et est déplacé lors du déplacement longitudinal du bras d'entraînement de telle sorte que le bras d'entraînement reste fermé sur au moins un côté de la fixation (8).

9. Système d'entraînement selon l'une quelconque des revendications précédentes, **caractérisé en ce que** le bras d'entraînement (1) a un corps de base (2) généralement en forme de T en section, sur la nervure centrale (3) duquel sont logées sur un côté l'unité d'entraînement linéaire (6) et sur le côté opposé la commande de courroie, et **en ce que** le corps de base (2) est fermé par un couvercle respectif (4) sur les deux côtés de la nervure centrale (3).
